# EUROPÄISCHE PATENTSCHRIFT

(11) **EP 1 011 345 B1**
(45) Veröffentlichungstag und Bekanntmachung des Hinweises auf die Patenterteilung: **02.02.2005**
(21) Anmeldenummer: 98943761.1
(22) Anmeldetag: 21.07.1998
(51) Int. Cl.: A23G 1/00

(54) **VORRICHTUNG ZUM KÜHLEN UND/ODER ANWÄRMEN VON GEGENSTÄNDEN**
DEVICE FOR COOLING AND/OR HEATING OBJECTS
DISPOSITIF POUR REFROIDIR ET/OU RECHAUFFER DES OBJETS

(30) Priorität: 25.07.1997 DE 19732037
(43) Veröffentlichungstag der Anmeldung: 28.06.2000
(73) Patentinhaber: KMB Produktions AG, 8552 Felben (CH)
(72) Erfinder: KNOBEL, Josef, CH-5586 Wigoltingen (CH)
(74) Vertreter: Weiss, Peter, Dr.
(86) Internationale Anmeldenummer: PCT/EP1998/004571
(87) Internationale Veröffentlichungsnummer: WO 1999/004643

(56) Entgegenhaltungen:
- EP-A- 0 528 593
- EP-A- 0 578 523
- WO-A-91/17400
- FR-A- 1 516 498
- US-A- 2 062 535
- US-A- 4 023 376
- US-A- 4 953 365

## Beschreibung

Die Erfindung betrifft eine Vorrichtung zum Kühlen und/oder Anwärmen von Gegenständen, insbesondere von Verzehrgütern in der Confiserie, mit zumindest einem Zylinder, der von einem Wendelförderer umgeben ist, auf dem die Gegenstände an Luftöffnungen vorbeiführbar sind, aus denen Luft aus dem Inneren des Zylinders ausströmt.

In vielen industriellen Bereichen werden Gegenstände hergestellt, die im Anschluss an die Herstellung gekühlt oder erwärmt werden müssen. Für derartige Temperiervorgänge gibt es eine Vielzahl von Vorrichtungen und Verfahren. Bspw. aus der EP-A-0 528 593 ist ein Ofen zum Erwärmen von Lebensmittelprodukten bekannt, bei welchem ein Wendelförderer eine Trommel umschlingt. Diese Trommel besteht aus vertikal angeordneten Stangen, die durch ihre Beabstandungen Öffnungen ausbilden. Über eine Wärmequelle wird Warmluft in den Ofen eingebracht, wobei die Warmluft mittels eines Gebläses zuerst durch die Lagen des Wendelförderers und dann durch die Öffnungen der Trommel angesaugt wird, wobei das Gebläse die Warmluft aus dem Inneren der Trommel absaugt.

Aus der FR-A-1516498 ist ferner eine Vorrichtung zum Kühlen von Lebensmitteln bekannt, bei der ein innerer Zylinder mit Zylinderöffnungen von einem Wendelförderer und dieser von einem äusseren Zylinder umgeben wird. Durch ein ausserhalb der Vorrichtung angeordnetes Gebläse wird Luft unter anderem auch aus dem Inneren des Zylinders abgesaugt, durch ein Wärmetauschaggregat geführt und von oben wieder auf den Zylinder bzw. Wendelförderer aufgebracht.

Aus der US-A-4 023 376 ist wiederum eine Vorrichtung zum Kühlen von Lebensmitteln bekannt, bei der ein Wendelförderer eine aus beabstandeten Stangen zusammengesetzte Trommel umschlingt. Im Inneren der Trommel befindet sich ein Gebläse, vor das ein Wärmetauschaggregat gesetzt ist. Das Gebläse presst Luft durch das Wärmetauschaggregat und durch die Stangen kanalisiert nach aussen, so dass an einer bestimmten Stelle der Trommel der Wendelförderer mit Kaltluft beaufschlagt wird.

Im vorliegenden Fall sollen vor allem Verzehrgüter aus der Confiserie temperiert werden, d. h., beispielsweise im One-Shot-Verfahren hergestellte Pralinen, die aus einer von einer Schokoladenhülle umgebenen Füllung bestehen. Hierbei kommt es vor allem darauf an, dass das Abkühlen nach dem Herstellen möglichst schnell und von allen Seiten gleichmäßig erfolgt, damit das Verzehrgut seine Form behält. Bislang werden hierzu nur wenige geeignete Vorrichtungen verwendet, die zudem meist sehr kompliziert aufgebaut sind.

Der vorliegenden Erfindung liegt die Aufgabe zugrunde, eine Vorrichtung der o.g. Art zu entwickeln, mit der auf einfache Art und Weise ein möglichst rasches Temperieren der Gegenstände erfolgen kann, wobei das Temperieren möglichst auch von allen Seiten erfolgen soll.

Zur Lösung dieser Aufgabe führt, dass der Zylinder oben abgedeckt ist und in den Zylinder bzw. in dessen Innenraum von unten her die Luft eingeführt wird, die aus den Luftöffnungen ausströmt.

Der Wendelförderer hat den großen Vorteil, dass er das zu temperierende Gut kontinuierlich an den Luftöffnungen vorbeiführen kann, so dass die zu temperierenden Gegenstände ständig mit Kühl- oder Warmluft beaufschlagt werden. Hierzu bietet es sich an, dass die Luftöffnungen in dem Zylinder ebenfalls wendelförmig angeordnet sind und zwar mit einer Steigung, die in etwa der Steigung des Wendelförderers entspricht. Hinzu kommt, dass die Luftöffnungen bevorzugt versetzt zueinander angeordnet sind, so dass das zu temperierende Gut ständig mit Luft beaufschlagt wird, obwohl im Zylinder kein durchgehender Schlitz ausgebildet ist.

Zur Erzeugung der Kühlung bzw. der Erwärmung sollen bevorzugt direkt in dem Zylinder ein Kühl- bzw. Heizelement und ein entsprechender Ventilator angeordnet sein. Selbstverständlich könnten beide Elemente auch ausserhalb des Zylinders liegen, jedoch gestattet die Integration der beiden Elemente in dem Zylinder einen wesentlich kompakteren Aufbau.

Obwohl mit der Anordnung von einem Zylinder und dem Wendelförderer schon eine recht gute Temperierung des Verzehrgutes erfolgt, soll in einem bevorzugten Ausführungsbeispiel der Erfindung einem ersten Zylinder ein zweiter Zylinder mit entsprechenden, oben beschriebenen, Luftöffnungen zugeordnet sein. Dabei ist der Wendelförderer so angeordnet, dass er den zweiten Zylinder in entgegengesetzter Richtung wie den ersten Zylinder umschlingt. D.h., der Wendelförderer steigt am ersten Zylinder auf und am zweiten Zylinder ab.

Der wesentliche Vorteil der Erfindung liegt darin, dass durch die Umkehrung der Drehrichtung des Wendelförderers die Verzehrgüter an dem einen Zylinder von der einen Seite mit dem temperierenden Medium und an dem anderen Zylinder an der anderen Seite beaufschlagt werden. Damit findet eine allseitige Beaufschlagung der Verzehrgüter mit Kühl- oder Warmluft statt, so dass die Temperierung sehr gleichmäßig erfolgt.

Wesentlicher Teil des Wendelförderers ist eine Führungsbahn, auf der eine Kette läuft, die mit einem Antrieb in Verbindung steht. Die Kette ist so ausgestaltet, dass auf ihr das zu temperierende Verzehrgut aufliegt und mit ihr transportiert werden kann. Sollte es sich als ratsam erweisen, kann die Kette oder einzelne Kettenglieder mit entsprechendem rutschfesten Material belegt werden.

In einem bevorzugten Ausführungsbeispiel besteht die Kette aus einer Vielzahl von flügelartigen Kettenglieder, die über Gelenke miteinander verbunden sind. Die Gelenke sind so ausgestaltet, dass ein Kurvenlauf der Kette ermöglicht ist. Das bedeutet in einem einfachen Ausführungsbeispiel, dass die einzelnen Kettenglieder über Verbindungsstifte miteinander verbunden sind, die in einem Kettenglied eine Doppelkonusbohrung durchgreifen. Diese Doppelkonusbohrung lässt eine allseitige Beweglichkeit der Kettenglieder zueinander zu.

Um in den einzelnen Etagen des Wendelförderers möglichst viel Höhe einzusparen und damit die gesamte Vorrichtung mit einer geringeren Höhe bauen zu können, erweist es sich als ratsam, die Kette mit jeweils zwei gegeneinander drehenden, liegenden Antriebszahnräder anzuordnen. Diese Antriebszahnräder sind beispielsweise in der Führungsbahn selbst angeordnet oder durchgreifen diese und stehen mit entsprechenden Lagerstellen an den Kettengliedern in Eingriffsverbindung, wobei diese Lagerstellen bevorzugt abgerundete Zahnflanken aufweisen. Diesen Lagerstellen sind ferner Führungslappen zugeordnet, die gewährleisten, dass die Antriebszahnräder auch bei Kurvenlauf in Eingriff mit den Zahnflanken der Kettenglieder bleiben.

Über die Höhe des Wendelförderers sind bevorzugt eine Mehrzahl derartiger Antriebszahnradpaare vorgesehen, jeweils etagenweise angeordnet. Die Antriebszahnräder jeder Etage werden bevorzugt von einem gemeinsamen Antriebsriemen, einer -kette od. dgl. angetrieben, die wiederum mit einem Antriebsrad in Verbindung steht. Die Antriebsräder einerseits eines Wendelförderers stehen miteinander über eine Antriebsstange in Verbindung, der von einem einzigen motorischen Antrieb angetrieben wird.

Im übrigen läuft die Kette mit ihren Kettengliedern in Schienenstreifen einer Führungsbahn, die jeweils aus einer Tragschicht und einer Gleitschicht besteht. Da bevorzugt sowohl die Kettenglieder als als auch die Führungsbahn aus Kunststoff besteht, sollte die Gleitschicht dem Kunststoff der Kettenglieder so angepasst sein, dass möglichst wenig Verschleisserscheinungen auftreten und andererseits ein Gleiten der Kettenglieder ohne Schwierigkeiten möglich ist.

Zur Führung der Kettenglieder besitzt die Führungsbahn eine Nut, die bevorzugt hinterschnitten ist, wobei im Hinterschnitt das Gelenk des Kettengliedes gleitet.

Insgesamt ist die Nut im Querschnitt ähnlich einem umgekehrten T geformt.

Um Fabrikationstoleranzen, Wärmedilatation und unterschiedliche Steigungen ausgleichen zu können, sind die Schienenstreifen bevorzugt nicht durchgehend an einem Maschinenrahmen festgelegt, sondern nur einends. Andernends greifen sie mit einer Zunge in eine Ausnehmung eines nachfolgenden Schienenstreifens ein, so dass beispielsweise einer Wärmeausdehnung dadurch auf einfache Art und Weise Rechnung getragen werden kann.

Insgesamt ist die Vorrichtung sehr gut zum Temperieren von Gegenständen geeignet und erfüllt die o.g. Aufgabe ohne Schwierigkeiten. Insbesondere ist sie sehr wartungsarm und kommt mit nur wenigen Antrieben aus.

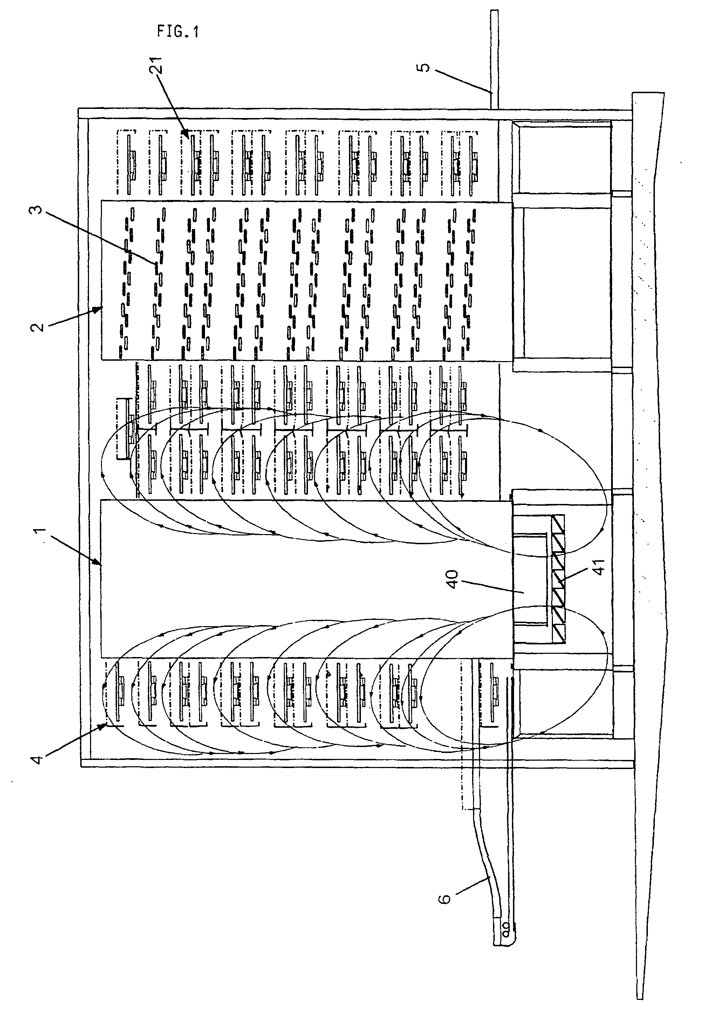

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer erfindungsgemässen Vorrichtung zum Kühlen und/oder Anwärmen von Gegenständen;
Figur 2 eine Draufsicht auf die Vorrichtung gemäss Figur 1;
Figur 3 einen teilweise dargestellten Schnitt durch einen Teil der Vorrichtung gemäss Figur 1;
Figur 4 eine perspektivische Darstellung eines Teils einer Führungsbahn;
Figur 5 eine Draufsicht auf ein erfindungsgemässes Kettenglied;
Figur 6 eine Seitenansicht des Kettengliedes gemäss Figur 5;
Figur 7 eine Draufsicht auf Teile des Antriebes für eine Kette;
Figur 8 eine Draufsicht auf Teile des Antriebes für die Vorrichtung gemäss Figur 1.

Eine Vorrichtung zum Kühlen und/oder Anwärmen von nicht näher gezeigten Gegenständen, wie beispielsweise von Paletten, auf denen sich Verzehrgüter aus der Confiserie befinden, weist zwei Zylinder 1 und 2 auf. Diese Zylinder 1 und 2 bestehen beispielsweise aus einem Blechmantel und besitzen Luftöffnungen 3, wobei nur am Zylinder 2 die entsprechenden Luftöffnungen angedeutet sind. Sie gibt es jedoch in gleichem Umfang auch am Zylinder 1.

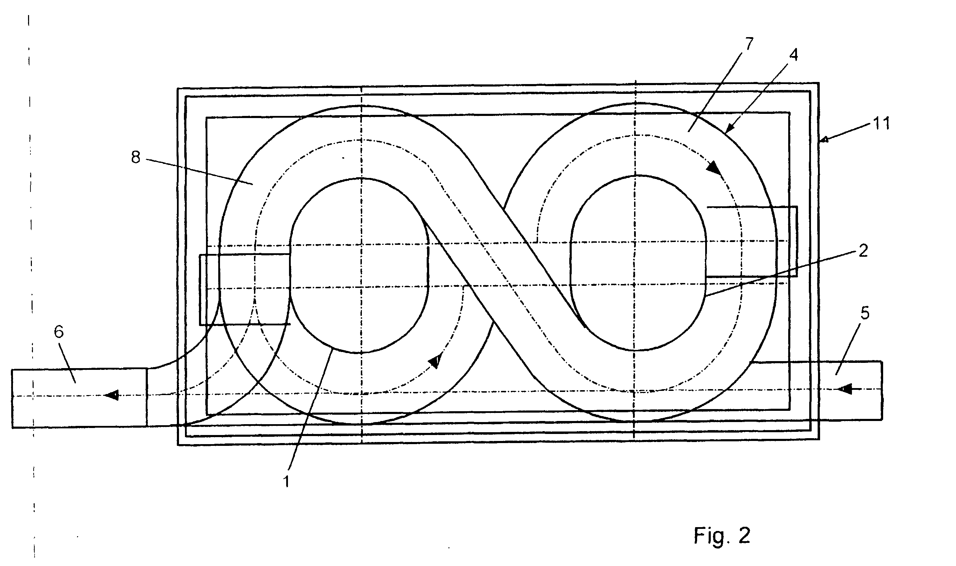

Die Luftöffnungen 3 sind wendelförmig und versetzt zueinander angeordnet, wie dies beim Zylinder 2 zu erkennen ist. Die Steigung der wendelförmigen Anordnung entspricht in etwa derjenigen eines Wendelförderers 4, der in Figur 2 besser zu erkennen ist. Dieser Wendelförderer 4 weist einen Einlauf 5 und einen Auslauf 6 auf. Dazwischen umschlingt er in wendelförmigen Bahnen 7 und 8 zuerst den Zylinder 2, wobei die wendelförmigen Bahnen 7 aufsteigen. Danach umschlingt er in entgegengesetzter Richtung den Zylinder 1, wobei die wendelförmigen Bahnen 8 absteigen. Am höchsten Punkt des Wendelförderers 4 liegt ein gerades Umkehrstück 9.

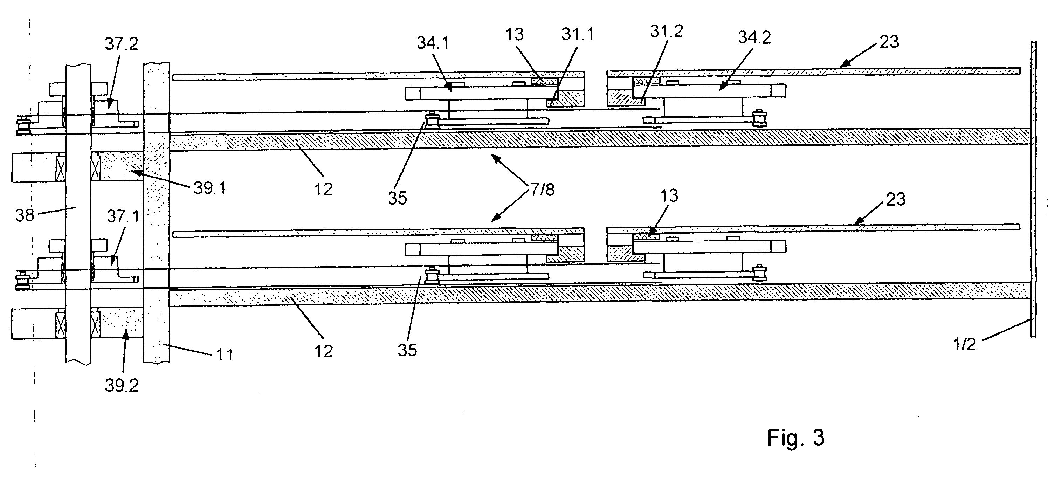

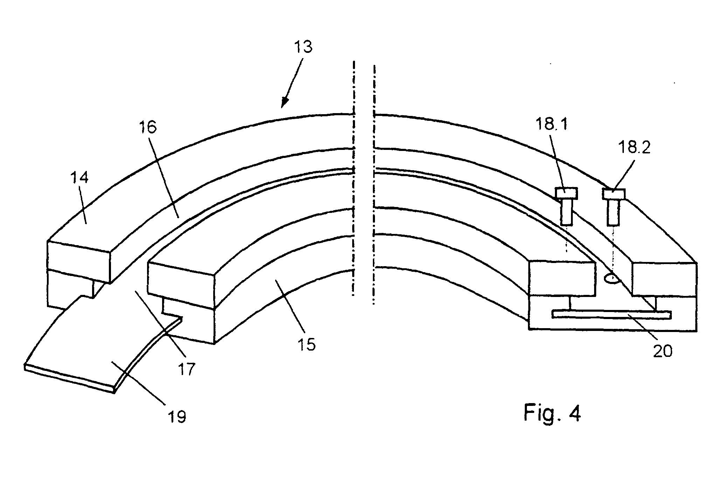

In Figur 3 sind im Querschnitt im wesentlichen zwei übereinanderliegende Bahnen 7/8 des Wendelförderers 4 angedeutet. Innen ist ein Teilabschnitt des Zylinders 1/2 erkennbar. Aussen ist eine Aussenwand als Teil eines Maschinenrahmens 11 angedeutet. Zwischen der Aussenwand und dem Zylinder 1/2 liegen Tragarme 12, auf denen Schienenstreifen 13 einer nicht näher gezeigten Führungsbahn aufliegen. Die Schienenstreifen 13 sind in Figur 4 näher gezeigt, in Figur 3 nur zum Teil angedeutet. Sie bestehen im wesentlichen jeweils aus einer Gleitschicht 14 und einer Tragschicht 15. Beide sind bevorzugt aus Kunststoff hergestellt, wobei die Gleitschicht 14 aus einem Kunststoff besteht, der verschleissarm ist, jedoch das Gleiten von später beschriebenen Kettengliedern zulässt.

Die Gleitschicht 14 ist zweigeteilt und weist einen Führungsschlitz 16 auf, in dem die später beschriebene Kette geführt ist. Sie bildet zusammen mit der Tragschicht 15 eine hinterschnittene Nut 17, wobei die hinterschnittene Nut 17 im Querschnitt die Form eines umgedrehten T hat.

In Figur 4 ist durch zwei Befestigungsbolzen 18.1 und 18.2 angedeutet, dass der Schienenstreifen 13 an einem Ende festliegt. Die Festlegung erfolgt beispielsweise an einem Tragarm 12. Am anderen Ende ragt stirnseitig aus dem Schienenstreifen 13 eine Zunge 19 heraus, die in Gebrauchslage in einer entsprechend geformten Ausnehmung 20 des nachfolgenden Schienenstreifens eingreift. Durch diese Anordnung wird gewährleistet, dass nicht nur Passungenaugigkeiten aufgenommen werden, sondern es kann auch jeder Wärmeausdehnung Rechnung getragen werden. Ferner können Längenunterschiede durch kleinere oder grössere Steigungen ausgeglichen werden.

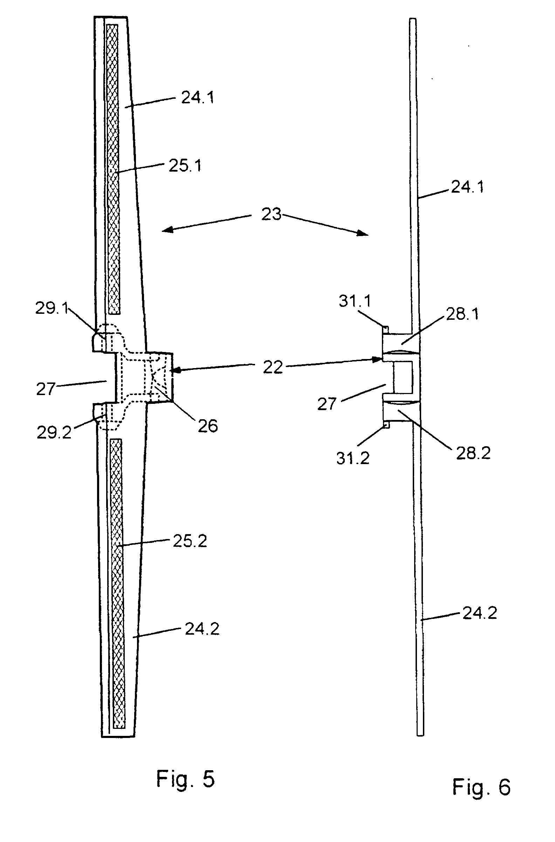

Die oben erwähnte Kette 21 besteht aus einer Vielzahl von miteinander über Gelenke 22 verbundenen Kettenglieder 23 (siehe Figur 5 und 6). Beidseits an das Gelenk 22 schliesst jeweils ein Flügel 24.1 und 24.2 an. Um die Rutschfestigkeit für aufliegende Paletten, insbesondere bei grösseren Steigungen zu vermeiden, kann jeder Flügel 24.1 und 24.2 jeweils mit einem Antirutschstreifen 25.1 und 25.2 belegt sein. Es genügt, wenn dieser Antirutschstreifen 25.1 und 25.2 aus einem etwas weicheren Kunststoff besteht.

Jedes Gelenk 22 besitzt eine Doppelkonusbohrung 26, die in einem Vorsprung angeordnet ist, mit dem das Kettenglied 23 in eine Ausnehmung 27 in einem nachfolgenden Kettenglied eingreift. Diese Ausnehmung 27 wird seitlich von zwei Lagerstreifen 28.1 und 28.2 begrenzt, welche jeweils von einer Bohrung 29.1 und 29.2 durchsetzt sind. Durch die Bohrungen 29.1 und 29.2 und durch die Doppelkonusbohrung 26 kann ein nicht näher gezeigter Lagerstift gesetzt werden, der zwei Kettenglieder miteinander verbindet. Der Doppelkonus 26 gewährleistet, dass die Kettenglieder 23 auch Kurven durchlaufen können.

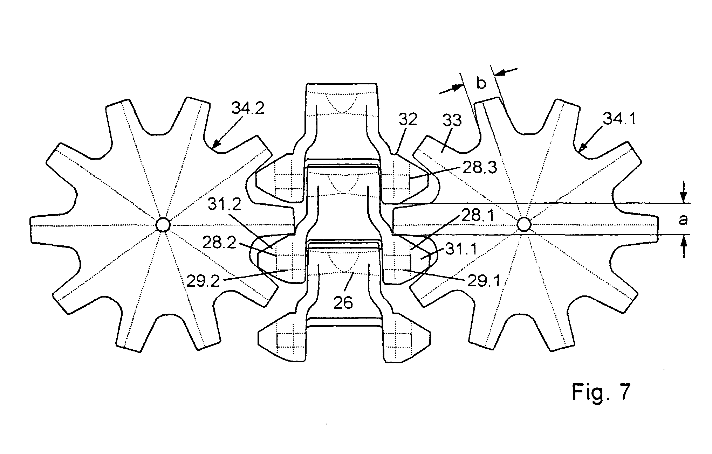

Seitlich ragen, etwa parallel zu den Flügeln 24.1 und 24.2 jeweils Führungslappen 31.1 und 31.2 von den Lagerstreifen 28.1 und 28.2 ab. Diese Führungslappen 31.1 und 31.2 sind besser in Figur 7 erkennbar. Sie übergreifen den jeweiligen Lagerstreifen 28.1 und 28.2, der in Figur 7 nur gestrichelt dargestellt ist.

Jeder Lagerstreifen 28.1 und 28.2 bildet eine gerundete Zahnflanke 32 zum Angriff für einen Zahn 33 eines Antriebszahnrades 34.1 bzs. 34.2. Bei Geradelauf der Kette, wie in Figur 7 gezeigt, weisen zwei aufeinanderfolgende Lagerstreifen 28.1 und 28.3 einen Abstand a voneinander auf, der grösser als eine Breite b eines Zahnes 33 ist. Hierdurch ist es möglich, dass die Kette 21 aus der Verzahnung mit den Antriebszahnrädern 34.1 und 34.2 genommen werden kann. Bei Kurbellauf jedoch übergreifen die Führungslappen 31.1 und 31.2 die jeweiligen Zähne 33, die gerade an den Zahnflanken 32 angreifen. Hierdurch wird es der Kette unmöglich gemacht, aus ihrem Antrieb herauszuspringen.

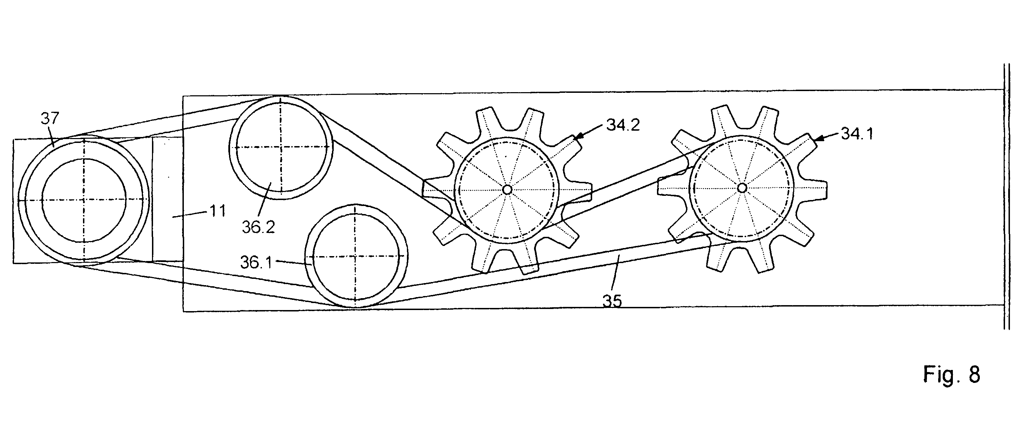

In Figur 8 ist im übrigen angedeutet, dass die beiden Antriebszahnräder 34.1 und 34.2 nur von einer Antriebskette 35 angetrieben werden. Zu diesem Zweck umschlingt die Antriebskette 35 die Antriebszahnräder 34.1 und 34.2 in der gezeigten Weise, so dass die Antriebszahnräder 34.1 und 34.2 gegenläufig drehen können.

Ferner sind der Antriebskette 35 noch zwei Getriebe bzw. Spannräder 36.1 und 36.2 zugeordnet. Der Antrieb erfolgt über ein Antriebsrad 37, welches sich am Maschinenrahmen 11 befindet.

In Figur 3 ist erkennbar, dass die Antriebsräder 37.1 und 37.2 einer Etage des Wendelförderers 4 über jeweils eine Antriebsstange 38 miteinander verbunden sind. Diese Antriebsstange 38 ist eine Ausgangswelle eines nicht näher gezeigten Motors. Zwischen den einzelnen Antriebsrädern 37.1 und 37.2 gibt es noch weitere Lagerstellen 39.1 und 39.2.

Die Funktionsweise der vorliegenden Erfindung ist folgende:

Beispielsweise zum Kühlen wird eine Palette mit einem Verzehrgut aus der Confiserie auf den Wendelförderer 4 am Einlauf 5 aufgebracht. Gleichzeitig werden in den Zylindern 1 und 2 Ventilatoren 40 und Kühlelemente 41 in Betrieb gesetzt, wodurch Luft in dem Innenraum des Zylinders 1/2 nach oben gefördert wird. Da jeder Zylinder 1 bzw. 2 oben abgedeckt ist, weicht die Kühlluft aus den Luftöffnungen 3 seitlich auf und trifft dort auf die Paletten, die an den Luftöffnungen 8 vorbeigeführt werden. Auf der wendelförmigen Bahn 7 des Zylinders 2 werden die Paletten erst von der einen Seite und auf der anderen Seite gekühlt. Sie gelangen dann gekühlt zum Auslauf 6.

### Positionszahlenliste

| | | | | | |
|---|---|---|---|---|---|
| 1 | Zylinder | 34 | Antriebszahnrad | 67 | |
| 2 | " | 35 | Antriebskette | 68 | |
| 3 | Luftöffnung | 36 | Getrieberad | 69 | |
| 4 | Wendelförderer | 37 | Antriebsrad | 70 | |
| 5 | Einlauf | 38 | Antriebsstange | 71 | |
| 6 | Auslauf | 39 | Lagerstelle | 72 | |
| 7 | wendelförmige Bahn | 40 | Ventilator | 73 | |
| 8 | wendelförmige Bahn | 41 | Kühlelement | 74 | |
| 9 | Umlenkstück | 42 | | 75 | |
| 10 | | 43 | | 76 | |
| 11 | Maschinenrahmen | 44 | | 77 | |
| 12 | Tragarm | 45 | | 78 | |
| 13 | Schienenstreifen | 46 | | 79 | |
| 14 | Gleitschicht | 47 | | | |
| 15 | Tragschicht | 48 | | a | Abstand |
| 16 | Führungsschlitz | 49 | | b | Breite |
| 17 | hinterschnittene Nut | 50 | | | |
| 18 | Befestigungsbolzen | 51 | | | |
| 19 | Zunge | 52 | | | |
| 20 | Ausnehmung | 53 | | | |
| 21 | Kette | 54 | | | |
| 22 | Gelenk | 55 | | | |
| 23 | Kettenglied | 56 | | | |
| 24 | Flügel | 57 | | | |
| 25 | Antirutschstreifen | 58 | | | |
| 26 | Doppelkonusbohrung | 59 | | | |
| 27 | Ausnehmung | 60 | | | |
| 28 | Lagerstreifen | 61 | | | |
| 29 | Bohrung | 62 | | | |
| 30 | | 63 | | | |
| 31 | Führungslappen | 64 | | | |
| 32 | Zahnflanke | 65 | | | |
| 33 | Zahn | 66 | | | |

## Patentansprüche

1. Vorrichtung zum Kühlen und/oder Anwärmen von Gegenständen, insbesondere von Verzehrgütern in der Confiserie, mit zumindest einem Zylinder (1, 2), der von einem Wendelförderer (4) umgeben ist, auf dem die Gegenstände an Luftöffnungen (3) vorbeiführbar sind, aus denen Luft aus dem Inneren des Zylinders (1, 2) ausströmt,
**dadurch gekennzeichnet,**
**dass** der Zylinder (1, 2) oben abgedeckt ist und in den Zylinder (1, 2) bzw. in dessen Innenraum von unten her die Luft eingeführt wird, die aus den Luftöffnungen (3) ausströmt.

2. Vorrichtung nach Anspruch 1, **dadurch gekennzeichnet, dass** die Luftöffnungen (3) in dem Zylinder (1, 2) wendelförmig angeordnet sind.

3. Vorrichtung nach Anspruch 1 oder 2, **dadurch gekennzeichnet, dass** im Zylinder (1, 2) ein Ventilator (40) und ein Kühl- bzw. Heizelement (41) angeordnet ist.

4. Vorrichtung nach einem der Ansprüche 1 bis 3, **dadurch gekennzeichnet, dass** einem ersten Zylinder (2) ein zweiter Zylinder (1) mit Luftöffnungen (3) zugeordnet ist, den der Wendelförderer (4) in entgegengesetzter vertikaler Richtung wie den ersten Zylinder (2) umschlingt.

5. Vorrichtung nach Anspruch 4, **dadurch gekennzeichnet, dass** der Wendelförderer (4) am ersten Zylinder (2) aufsteigt und am zweiten Zylinder (1) absteigt.

6. Vorrichtung nach wenigstens einem der Ansprüche 1 bis 5, **dadurch gekennzeichnet, dass** im Wendelförderer (.4) auf einer Führungsbahn eine Kette (21) läuft, die mit einem Antrieb in Verbindung steht.

7. Vorrichtung nach Anspruch 6, **dadurch gekennzeichnet, dass** Schienenstreifen (13) der Führungsbahn aus einer Tragschicht (15) und einer Gleitschicht (14) bestehen.

8. Vorrichtung nach Anspruch 7, **dadurch gekennzeichnet, dass** der Schienenstreifen (13) einends mit einer Zunge (19) in eine Ausnehmung (20) in den nachfolgenden Schienenstreifen (13) eingreift.

9. Vorrichtung nach Anspruch 7 oder 8, **dadurch gekennzeichnet, dass** jeder Schienenstreifen (13) eine Nut, bevorzugt eine hinterschnittene T-förmige Nut (17) aufweist, in der die Kette (21) läuft.

10. Vorrichtung nach wenigstens einem der Ansprüche 6 bis 9, **dadurch gekennzeichnet, dass** die Kette (21) aus einer Vielzahl von flügelartigen Kettengliedern (23) besteht, welche die tragende Fläche des Wendelförderers (4) ausbilden und die über Gelenke (22) miteinander verbunden sind.

11. Vorrichtung nach Anspruch 10, **dadurch gekennzeichnet, dass** seitlich vom Gelenk (22) jeweils ein Führungslappen (31.1, 31.2) abragt, der in einer Kurve, im Gegensatz zum Geradeauslauf, einen Zahn (33) eines Antriebszahnrades (34.1, 34.2) zumindest teilweise überdeckt.

12. Vorrichtung nach Anspruch 11, **dadurch gekennzeichnet, dass** der Kette (21) als Antrieb jeweils zwei gegeneinander drehende, liegende Antriebszahnräder (34.1, 34.2) zugeordnet sind.

13. Vorrichtung nach Anspruch 12, **dadurch gekennzeichnet, dass** die beiden Antriebszahnräder (34.1, 34.2) über einen gemeinsamen Antriebsriemen, eine -kette (35) od. dgl. miteinander verbunden und von einem Antriebsrad (37) antreibbar sind.

14. Vorrichtung nach Anspruch 13, **dadurch gekennzeichnet, dass** Antriebsräder (37) auf den einzelnen Etagen des Wendelförderers (4) über eine gemeinsame Antriebsstange (38) und jeweils ein Kegelradgetriebe mit einem Motor verbunden sind.

## Claims

1. Apparatus for cooling and/or heating articles, more especially edible goods in confectionery, said apparatus having at least one cylinder (1, 2), which is surrounded by a helical conveyor (4), on which the articles are guidable past air apertures (3), out of which apertures air from the interior of the cylinder (1, 2) flows, **characterised in that** the cylinder (1, 2) is covered at its upper end, and the air, which flows out of the air apertures (3), is introduced into the cylinder (1, 2) or respectively into the interior of said cylinder from below.

2. Apparatus according to claim 1, **characterised in that** the air apertures (3) are disposed helically in the cylinder (1, 2).

3. Apparatus according to claim 1 or 2, **characterised in that** a fan (40) and a cooling or heating element (41) are disposed in the cylinder (1,2).

4. Apparatus according to one of claims 1 to 3, **characterised in that** a second cylinder (1), which is provided with air apertures (3), and around which the helical conveyor (4) loops in the opposite vertical direction to a first cylinder (2), is associated with the first cylinder (2).

5. Apparatus according to claim 4, **characterised in that** the helical conveyor (4) rises on the first cylinder (2) and descends on the second cylinder (2).

6. Apparatus according to at least one of claims 1 to 5, **characterised in that** a chain (21), which communicates with a drive means, travels in the helical conveyor (4) along a guide path.

7. Apparatus according to claim 6, **characterised in that** rail strips (13) of the guide path comprise a supporting layer (15) and a slide layer (14).

8. Apparatus according to claim 7, **characterised in that** the rail strip (13) engages at one end with a tongue (19) in a recess (20) in the subsequent rail strip (13).

9. Apparatus according to claim 7 or 8, **characterised in that** each rail strip (13) has a groove, preferably an undercut T-shaped groove (17), in which the chain (21) travels.

10. Apparatus according to at least one of claims 6 to 9, **characterised in that** the chain (21) comprises a plurality of vanelike chain links (23), which form the supporting area of the helical conveyor (4), and which are interconnected via pivot joints (22).

11. Apparatus according to claim 10, **characterised in that** a respective guide lug (31.1, 31.2) protrudes laterally from the pivot joint (22), which lug at least partially covers a tooth (33) of a toothed driving wheel (34.1, 34.2) in a curve, as opposed to a rectilinear configuration.

12. Apparatus according to claim 11, **characterised in that** two counter-rotating horizontal toothed driving wheels (34.1, 34.2) are respectively associated with the chain (21) as the drive means.

13. Apparatus according to claim 12, **characterised in that** the two toothed driving wheels (34.1, 34.2) are interconnected via a common driving belt, a driving chain (35) or the like, and are drivable by a driving wheel (37).

14. Apparatus according to claim 13, **characterised in that** driving wheels (37) on the individual levels of the helical conveyor (4) are connected to a motor via a common driving rod (38) and a respective bevel gear.

## Revendications

1. Dispositif pour refroidir et/ou réchauffer des objets, en particulier des produits de consommation en confiserie, avec au moins un cylindre (1, 2) qui est entouré d'un transporteur hélicoïdal (4) sur lequel les objets peuvent être amenés devant des ouvertures d'air (3) desquelles sort de l'air de l'intérieur du cylindre (1,2),
**caractérisé par le fait**
**que** le cylindre (1, 2) est obturé dans le haut et que l'air qui sort des ouvertures d'air (3) est introduit dans le cylindre (1, 2) et/ou dans son espace intérieur depuis le bas.

2. Dispositif selon la revendication 1, **caractérisé par le fait que** les ouvertures d'air (3) dans le cylindre (1, 2) sont disposées de manière hélicoïdale.

3. Dispositif selon la revendication 1 ou 2, **caractérisé par le fait que** dans le cylindre (1, 2) sont disposés un ventilateur (40) et un élément de refroidissement et/ou chauffant (41).

4. Dispositif selon l'une des revendications 1 à 3, **caractérisé par le fait qu'**à un premier cylindre (2) est associé un deuxième cylindre (1) à ouvertures d'air (3) qui entoure le transporteur hélicoïdal (4) dans le sens vertical opposé au premier cylindre (2).

5. Dispositif selon la revendication 4, **caractérisé par le fait que** le transporteur hélicoïdal (4) monte au premier cylindre (2) et descend au deuxième cylindre (1).

6. Dispositif selon au moins l'une des revendications 1 à 5, **caractérisé par** le fait qui dans le transporteur hélicoïdal (4) passe sur un chemin de guidage une chaîne (21) qui communique avec un entraînement.

7. Dispositif selon la revendication 6, **caractérisé par le fait que** les bandes de rail (13) du chemin de guidage se composent d'une couche de support (15) et d'une couche de glissement (14).

8. Dispositif selon la revendication 7, **caractérisé par le fait que** la bande de rail (13) s'engage, à une extrémité, par une languette (19) dans un évidement (20) dans la bande de rail (13) suivante.

9. Dispositif selon la revendication 7 ou 8, **caractérisé par le fait que** chaque bande de rail (13) présente une rainure, de préférence une rainure en T à contre-dépouille (17), dans laquelle (21) passe la chaîne.

10. Dispositif selon au moins l'une des revendications 6 à 9, **caractérisé par le fait que** la chaîne (21) se compose d'une pluralité de maillons de chaîne en forme d'ailette (23) qui constituent la face portante du transporteur hélicoïdal {4) et qui sont reliés entre eux par des articulations (22).

11. Dispositif selon la revendication 10, **caractérisé par le fait que** de l'articulation (22) sort latéralement chaque fois une oreille de guidage (31.1, 31.2) qui, dans une courbe, contrairement à la sortie droite, recouvre au moins partiellement une dent (33) d'une roue dentée d'entraînement (34.1, 34.2).

12. Dispositif selon la revendication 11, **caractérisé par le fait qu'**à la chaîne (21) sont chaque fois associées, comme entraînement, deux roues dentées d'entraînement horizontales (34.1, 34.2) tournant dans le sens opposé l'une à l'autre.

13. Dispositif selon la revendication 12, **caractérisé par le fait que** les deux roues dentées d'entraînement (34.1, 34.2) sont reliées entre elles par l'intermédiaire d'une courroie, d'une chaîne d'entraînement (35) ou autre commune et peuvent être entraînées par une roue d'entraînement (37).

14. Dispositif selon la revendication 13, **caractérisé par le fait que** les roues d'entraînement {37) aux différents étages du transporteur hélicoïdal (4) sont reliées, par l'intermédiaire d'une tige d'entraînement (38) commune et, chacune, par un engrenage à roue conique, à un moteur.
